# EUROPÄISCHE PATENTSCHRIFT

(11) **EP 2 198 981 B1**
(45) Veröffentlichungstag und Bekanntmachung des Hinweises auf die Patenterteilung: **14.10.2015**
(21) Anmeldenummer: 09014022.9
(22) Anmeldetag: 09.11.2009
(51) Int. Cl.: B05D 3/06, B29C 71/04, C08J 3/28

(54) **Verfahren und Apparatur zur direkten strahleninduzierten Polymerisation und Vernetzung von Acrylaten und Methacrylaten**
Method and apparatus for direct radiation-induced polymerisation and integration of acrylates and methacrylates
Procédé et appareil destinés à la polymérisation à rayonnement direct réduit et à la liaison d'acrylates et de méthacrylates

(30) Priorität: 10.12.2008 DE 102008061244
(43) Veröffentlichungstag der Anmeldung: 23.06.2010
(73) Patentinhaber: IOT - Innovative Oberflächentechnologien GmbH, 04318 Leipzig (DE)
(72) Erfinder: Riedel, Carsten, Dr., 04416 Markkleeberg (DE); Mehnert, Reiner, Prof. Dr., 04416 Markkleeberg (DE); Bauer, Frank, Dr., 04318 Leipzig (DE); Schubert, Rolf, Dr., 04688 Trebsen (DE)
(74) Vertreter: Köhler, Tobias

(56) Entgegenhaltungen:
- WO-A1-2007/031541
- WO-A1-2007/068322
- DE-A1-102005 024 362

## Beschreibung

Die Erfindung betrifft ein Verfahren zur direkten Auslösung der Polymerisation und Vernetzung von monomeren und/oder oligomeren Acrylaten und Methacrylaten durch ultraviolette Strahlung. Zur Bestrahlung wird eine Quelle hochenergetischer Photonen, z.B. ein Xenon- oder Argon-Excimerstrahler mit einem Quecksilber-Mitteldruck-Strahler kombiniert. Die Bestrahlung erfolgt unter Inertgas bei stark verringerter Sauerstoffkonzentration.

Direkte Polymerisation und Vernetzung durch ultraviolette Strahlung bedeutet in diesem Falle, dass Polymerisation und Vernetzung ohne die dem Stand der Technik entsprechende Zugabe von Photoinitiatoren zu Acrylaten oder Methacrylaten , ausschließlich durch Photonen direkt in der Monomer/Oligomer-Matrix ausgelöst werden.

Bisher ist bekannt, dass schnelle Elektronen die direkte Polymerisation und Vernetzung von Acrylaten und Methacrylaten auslösen können. Reaktionsmechanismus und Methoden der Elektronenstrahlhärtung werden ausführlich z.B. in R.Mehnert, IJanovsky, A.Pincus: UV & EB Curing Technology and Equipment, Wiley-SITA, London 1998 beschrieben.

Elektronenstrahlhärtung von Acrylaten und Methacrylaten erfolgt immer unter Inertgas. Durch Elektronenbestrahlung werden hohe Radikaldichten durch direkte Absorption und Coulomb-Wechselwirkung der schnellen Elektronen in der Acrylat/Methacrylat-Matrix erzeugt. Polymerisation und Vernetzung laufen mit hoher Geschwindigkeit ab. Da die Sauerstoffkonzentration in der Bestrahlungszone stark reduziert ist, sind Reaktionen mit Sauerstoff wie das Abfangen von Startradikalen oder Kettenabbruch durch Sauerstoff zu vernachlässigen. Durch Elektronenstrahlhärtung entstehen so polymere Netzwerke mit hoher Netzwerkdichte und sehr hohen Molekulargewichten.

Ein Vorteil der Elektronenstrahl-gehärteten Beschichtungen ist ihr extrem geringer Gehalt an niedermolekularen, migrierbaren Bestandteilen. Die Elektronenstrahlhärtung wird deshalb oft zur Härtung von Druckfarben und Beschichtungen auf Lebensmittelverpackungen eingesetzt.

Entsprechend des Standes der Technik ist für Polymerisation und Vernetzung von Acrylaten oder Methacrylaten durch UV-B- oder UV-A-Strahlung die Zugabe eines Photoinitiators mit typischen Konzentrationen von 2 bis 8 Ma.% erforderlich. Acrylate oder Methacrylate absorbieren UV-B-oder UV-A-Strahlung nicht. Der Photoinitiator besitzt jedoch Chromophore, die die Photonen absorbieren und über nachfolgende Reaktionen Radikalpaare bilden. Diese Radikale lösen dann Polymerisation und Vernetzung der Acrylat/Methacrylat-Matrix aus. Hierbei handelt es sich um eine indirekte Auslösung von Polymerisation und Vernetzung.

Offenlegungsschift DE102005024362 offenbart ein Verfahren zur Herstellung gehärteter Materialien aus mit aktinischer Strahlung härtbaren Stoffgemischen (Stoffgemische) durch Bestrahlung mit UV-Strahlung der folgenden spektralen Verteilung und Dosis verwendet:
- Wellenlänge lambda = 400 bis 320 nm (3,10 eV bis 3,87 eV); Dosis = 500 bis 2.500 mJ/cm²;
- Wellenlänge lambda = 320 bis 290 nm (3,87 eV bis 4,27 eV); Dosis = 700 bis 3.000 mJ/cm²;
- Wellenlänge lambda = 290 bis 180 nm (4,27 eV bis 6,89 eV); Dosis = 100 bis 500 mJ/cm².

Nachteilig ist, das bei der dem Stand der Technik entsprechenden UV-Härtung mehr als 60% der extrahierbaren Substanzen Photoinitiator-Abbauprodukte bzw. nicht chemisch umgesetzte Photoinitiatoren sind. Aufgabe der Erfindung ist es, die vorgenannten Nachteile des Standes der Technik auszuräumen und, eine Oberfläche mit verbesserter Oberflächenhärte zu schaffen, welche eine Diffusionsbarriere für gasförmige und flüssige Substanzen darstellt und damit eine verbesserte Chemikalienbeständigkeit der Oberfläche bewirkt sowie eine höhere Beständigkeit gegen Aussenbewitterung verursacht. Dieser Nachteil wird durch die Kombination von Excimer- und Quecksilber-UV-Strahlung, Polymerisation und Vernetzung von Acrylaten und Methacrylaten direkt, das heißt, ohne Zugabe von Photoinitiatoren, auszulösen und mit stark verringertem Anteil an extrahierbaren Substanzen gemäß den Patentansprüchen 1 bis 5 gelöst und wird nachfolgend näher er läutert.

Gefunden wurde, dass bei Bestrahlung von Acrylaten und Methacrylaten mit hochenergetischen Photonen, deren Energien im Bereich zwischen 6 und 10 eV liegen, sowohl die Acrylat- Carbonyl- als auch ihre VinylGruppen als innere Chromophore wirken, die die Photonen absorbieren. Als Folge entstehen angeregte Molekülzustände, die entweder durch unimolekularen Zerfall und /oder durch H-Abstraktion Radikalpaare bilden und damit die radikalische Polymerisation und Vernetzung auslösen können.

Diese hochenergetischen Photonen lösen in Acrylaten und Methacrylaten Prozesse der Radikalbildung aus, wie sie analog in Photoinitiatoren bei geringeren Photonenenergien ablaufen. Bei Bestrahlung mit hochenergetischen Photonen erfolgt die Radikalbildung dabei direkt im Acrylat oder Methacrylat und nicht im zugesetzten Photoinitiator.

Bei der Absorption von Photonen mit Energien zwischen 6 und 10 eV wirken Acrylate und Methacrylate als "interne Photoinitiatoren".

Überraschend wurde ebenfalls gefunden, dass Polymerisation und Vernetzung in Acrylaten und Methacrylaten durch Photonen - auch als UV-Härtung bezeichnet - ohne Zugabe von Photoinitiatoren nicht nur ausgelöst werden kann, sondern auch Schichten bis zu über 50 µm in weniger als 1 s vollständig ausgehärtet werden können, wenn folgende Bedingungen erfüllt werden:
- Als Quelle für hochenergetische Photonen wird ein Excimerstrahler mit Photonenenergien von 7,2eV (Xenonstrahler) oder 9,85 eV (Argonstrahler) ausreichender Leistung eingesetzt.

Die Acrylat/Methacrylat-Matrix wird mit diesen Photonen bestrahlt.

Ein dafür geeigneter Argon-Excimerstrahler wird z. B. in der EP 000001050395B1 beschrieben.

Xenon-Excimerstrahler, wie sie für die physikalische Mattierung z.B. in DE 102006042063A1 oder DE 102005060198A1 beschrieben werden, eignen sich prinzipiell als Quellen für hochenergetische Photonen zur direkten Polymerisation und Vernetzung von Acrylaten.
- Zeitlich und räumlich unmittelbar nach der Bestrahlung mit hochenergetischen Photonen erfolgt die Bestrahlung der Monomer/Oligomer-Matrix mit einem Mitteldruck-Quecksilber-Strahler, dessen Quarzgehäuse keinen Ozonfilter besitzt, der den UV-C-Antell des Quecksilber-Gasentladungsspektrums unterhalb einer Wellenlänge von 230 nm absorbiert.
- Beide Bestrahlungsvorgänge erfolgen unter Inertgas, z.B. Stickstoff oder Kohlendioxid, bei einem Sauerstoffgehalt kleiner 2000 ppm, vorzugsweise kleiner 100 ppm.

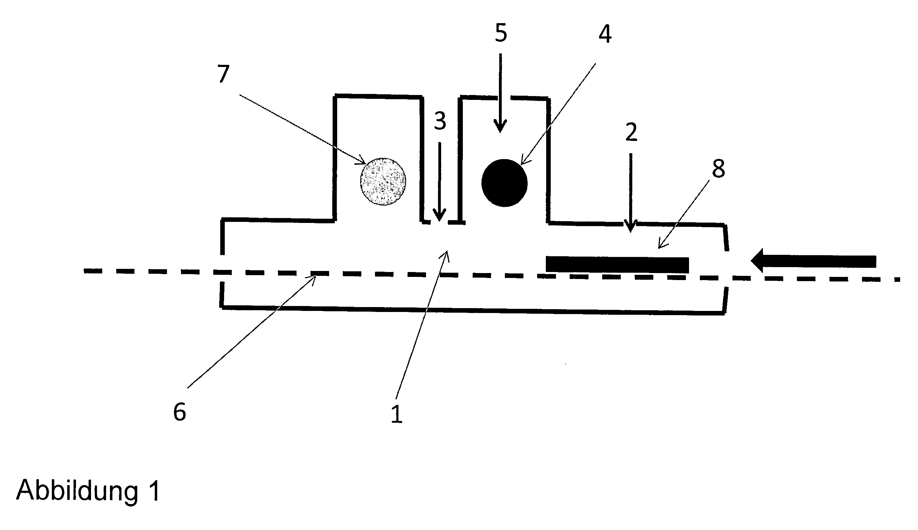

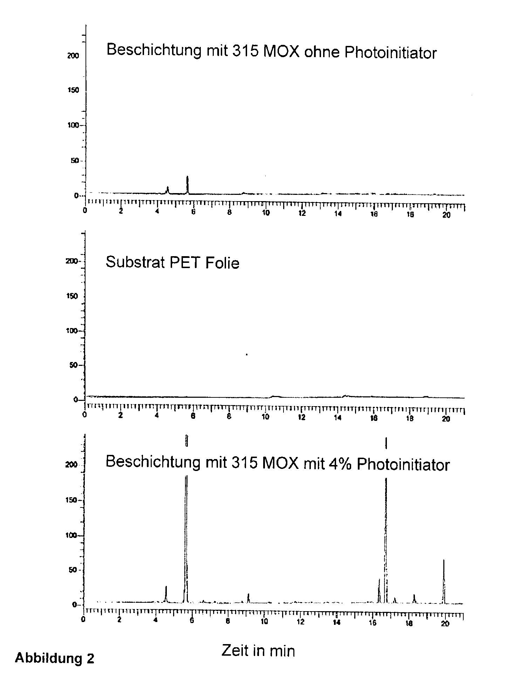

Die Bestrahlung kann vorteilhaft mit der in Abbildung 1 schematisch dargestellten Apparatur erfolgen und soll anhand dieser nachfolgend näher beschrieben werden.

### Abbildungen

### Abbildung 1

Apparatur zur direkten strahleninduzierten Polymerisation und Vernetzung von Acrylaten und Methacrylaten (schematisch).

### Abbildung 2

Bestimmung von migrierbaren Bestandteilen durch GC headspace aus Beschichtung einer PET-Folie mit Acrylat-Nanokomposit 315 MOX ohne Photoinitiator, gehärtet nach dem erfindungmäßen Verfahren (oben), migrierbare Bestandteile aus der als Substrat verwendeten PET-FOlie (Mitte) und migrierbare Bestandteile aus der Beschichtung einer PET-Folie mit dem Acrylat-Nanokomposit 315 MOX gehärtet mit 4% Photoinitiator Darocur 1173 (CIBA, Basel) nach dem Stand der Technik mit einem Mitteldruck-Quwecksilberstrahlen (unten).

Eine geschlossene Bestrahlungskammer 1 wird über die Eingangsdüsen 2 und über Volumendüsen 3 mit gasförmigem Stickstoff versorgt. Unmittelbar hinter den Eingangsdüsen ist der Xenon- oder Argon-Excimerstrahler 4 angeordnet.

Er besitzt eine Wasserkühlung und eine Stickstoffeinspeisung 5 oberhalb seiner Strahlerröhre.

Das Gehäuse des Strahlers 4 sitzt dicht auf dem oberen Segment der Bestrahlungskammer 1 auf.

Die Emission des Excimerstrahlers 4 erfolgt gerichtet in die Bestrahlungsebene der Kammer 1.

Die mit Acrylat- oder Methacrylat beschichtete Probe 8 gelangt über ein Förderband 6 in die inertisierte Bestrahlungsklammer 1 und durchläuft zunächst die Bestrahlungszone des Excimerstrahlers 4.

In Bahnrichtung unmittelbar hinter dem Excimerstrahler 4 ist der Mitteldruck-Quecksilber-Strahler 7 angeordnet.

Die Bestrahlungskammer 1 besitzt in dieser Position eine abgedichtete Quarzplatte, durch die die Strahlung eindringen kann. Der Mitteldruck-Quecksilber-Strahler 7 ist damit von der Kammer 1 gasdicht getrennt und kann mit seiner üblichen Kühlung betrieben werden.

Vorteilhaft ist es, wenn sowohl die Quarzröhre des Quecksilber-Strahlers 7 als auch die Quarzplatte auf der Bestrahlungskammer bis zu Wellenlängen von 180 nm transparent sind.

Die mit Acrylat oder Methacrylat beschichtete Probe 8 durchläuft auf dem Förderband die Bestrahlungszone des Excimerstrahlers 4 und des Mitteldruck-Quecksilber-Strahlers 7. Nach Durchlaufen der beschriebenen Apparatur ist die Probe 8 vollständig polymerisiert und vernetzt.

Ein wesentlicher Vorteil des erfindungsgemäßen Verfahrens ist die Möglichkeit, Acrylat- oder Methacrylat-Schichten ohne Zusatz von Photoinitiatoren bei kurzen Bestrahlungszeiten zu härten.

Ein weiterer Vorteil des erfindungsgemäßen Verfahrens besteht darin, dass die hohe Vernetzungsdichte der durch die Kombination von Excimer - und Quecksilber-UV-Strahlung erzeugten polymeren Matrix eine hohe Oberflächenhärte der Beschichtungen erzeugt, eine Diffusionsbarriere für gasförmige und flüssige Substanzen darstellt und damit eine verbesserte Chemikalienbeständigkeit der Oberfläche bewirkt sowie eine höhere Beständigkeit gegen Außenbewitterung verursacht.

Die Bewitterungsbeständigkeit wird vor allem dadurch verbessert, dass Reste von Photoinitiatoren oder deren Abbauprodukte, die bei Sonneneinstrahlung Radikale erzeugen und somit Abbauprozesse in der polymeren Matrix auslösen können, nicht vorhanden sind.

Bei der Bestrahlung von Acrylat/Methacrylat-Schichten mit 172 oder 126 nm Photonen erhält man im Allgemeinen eine Mikrostruktur auf der Schichtoberfläche, die die Schichtoberfläche matt erscheinen lässt. Der Glanzverlust ist u.a. von der Zeltdifferenz zwischen Excimer- und Quecksilber-Bestrahlung und von der Acrylat/Methacrylat-Formulierung abhängig, lässt sich jedoch nicht ganz vermeiden, das heißt, die erfindungsgemäße direkte UV-Härtung führt immer zu einem Glanzverlust der Beschichtung.

Das erfindungsgemäße Verfahren soll nachfolgend anhand von Beispielen erläutert werden.

### Beispiel 1

Es werden zwei Formulierungen nach Tabelle 1 mit und ohne Photoinitiator hergestellt.

**Tabelle 1: Acrylat/Methacrylat-Formulierungen mit und ohne Photoinitiator**

| **Formulierung 1 (ohne Photoinitiator)** | | **Formulierung 2 (mit Photoinitiator)** | |
|---|---|---|---|
| Komponente | Gew.% | Komponente | Gew.% |
| Urethanacrylat EB 5129 (CYTEC*) | 10 | Urethanacrylat EB 5129 ( CYTEC) | 10 |
| Urethanacrylat EB 264 (CYTEC) | 25 | Urethanacrylat EB 264 (CYTEC) | 25 |
| Hexandioldiacrylat SR 238 (Sartomer**) | 60 | Hexandioldiacrylat SR 238 (Sartomer) | 57 |
| Oligomeres Methacrylat SB 500 E 50 (Sartomer) | 5 | Oligomeres Methacrylat SB 500 E 50 (Sartomer) | 5 |
| | | Photoinitiator DC 1173 | 3 |

| | | | |
|---|---|---|---|
| CYTEC*: Cytec Surface Specialties SA/NV, Europe, Erasmus Office Park, Square Marie Curie 11,B-1070 Brussels, Belgium Sartomer**: SARTOMER Division of CRAY VALLEY, La Defense 2 - 12, place de l'Iris, F-92062 - PARIS LA DÉFENSE CEDEX | | | |

Die flüssigen Formulierungen 1 und 2 werden mit einem Rollrakel auf eine Polyesterfolie Typ Melinex 505 aufgetragen. Das Auftragsgewicht wird auf 10 g/m² eingestellt. Dann wird die Beschichtung mit einer Geschwindigkeit von 3 m/min durch eine Bestrahlungsanlage entsprechend Abbildung 1 gefahren und gehärtet.

Die Formulierung 1 (ohne Photoinitiator) wird sowohl mit Photonen des 172 nm Excimerstrahlers mit einer Dosis von 12 mJ/cm² und unmittelbar anschließend mit einem Quecksilber-Mitteldruck-Strahler einer elektrischen Leistung von 120 W/cm bestrahlt. Die mit diesem Strahler applizierte Dosis beträgt 800 mJ/cm². Die Bestrahlung erfolgt unter Stickstoff bei einer Sauerstoff-Restkonzentration von 50 ppm.

Die Formulierung 2 (mit Photoinitiator) wird ebenfalls mit einem Auftraggewicht von 10 g/m² aufgetragen, jedoch nur mit dem Quecksilber-Mitteldruck-Strahler gehärtet.

Die applizierte Dosis beträgt ebenfalls 800 mJ/cm². Wie bei Formulierung 1 erfolgt die Bestrahlung unter Stickstoff bei einer Sauerstoff-Restkonzentration von 50 ppm.

### Beispiel 2

Als Formulierung 3 bzw.4 wird ein kommerziell erhältlicher Nanokomposit-Lack 315 MOX bzw. M III des Herstellers Cetelon Nanotechnik GmbH verwendet, der difunktionelle Acrylate als Reaktivverdünner, oligomere Urethanacrylate als Bindemittel und ca. 25% nanoskaliges SiO₂ als anorganische Komponente enthält.

Die dabei erzielten Ergebnisse sind in Tabelle 2 dargestellt.

Dabei stellen die beispielhaften Formulierungen 3 und 4 mit den Bestrahlungen mit Excimer und Hg-Strahler die erfindungsgemäßen Anwendungen dar und sind wie folgt erläutert:
*Nanolack 315 MOX, **Nanolack M III, Hersteller: Cetelon Nanotechnik GmbH, Gustav-Adolf-Ring 22, D-04838 Eilenburg Bewertung der Chemikalienbeständigkeit nach EN 12 720: 5 = keine sichtbaren Veränderungen, 4 = leichte Glanz- und Farbänderungen, 3 = leichte Markierungen, 2 = starke Markierungen, Oberflächenstruktur jedoch weitgehend unverändert.

Im Ergebnis der erfindungsgemäßen Bestrahlung ist festzustellen, dass der Doppelbindungsumsatz für Formulierungen ohne Photoinitiator den Umsatz der Formulierung mit Photoinitiator deutlich übersteigt, die gemessene Globalmigration für Beschichtungen ohne Photoinitiator weit unter der für entsprechende Beschichtungen mit Photoinitiator liegt, die Chemikalienbeständigkeit der nach dem erfindungsgemäßen Verfahren gehärteten Schicht mindestens vergleichbar mit einer durch einem Quecksilber-Mitteldruck-Strahler gehärteten Beschichtung ist und die Mikrohärte der direkt gehärteten Schicht deutlich höher liegt als die Mikrohärte der mit einem Quecksilber-Mitteldruck-Strahler gehärteten Beschichtung.

**Tabelle 2**

| | | **Doppelbindungsumsatz in** %, bestimmt mit FTIR-ATR (Bruker) | | **Globalmigration** bestimmt als Summe migrierbarer Anteile (Peakfläche) mit Headspace GC (Perkin Elmer) | **Chemikalien beständigkeit** | | **Mikrohärte** (Martenshärte nach DIN EN ISO 14577) **in N/mm²** bestimmt mit Fischerscope HM 200 |
|---|---|---|---|---|---|---|---|
| **Beschichtung nach** | **Härtung** | | **Glanz bei 60°** | | | | |
| | | | | | Aceton | 16h | |
| | | | | | Senf | 16 h | |
| | | | | | NaOH 25% | 10min | |
| | | | | | Jod 2% | 2 min | |
| | | | | | Aceton | 3 | |
| Formulierung 1 (ohne Photoinitiator) | mit 172 nm Excimer und Hg-Strahler | 99 | 6 | 2.1X10⁵ | Senf | 5 | 131 |
| | | | | µVs | NaOH | 4 | |
| | | | | | Jod | 3,5 | |
| | | | | | Aceton | 4 | |
| Formulierung 2 (mit Photoinitiator) | Hg-Strahler **(Stand der Technik)** | 92 | 65 | 5.4x10⁵ µVs | Senf | 5 | |
| | | | | | NaOH | 5 | 113 |
| | | | | | Jod | 3 | |
| Formulierung 3 Nanokomposit* (ohne Photoinitiator) | mit 172 nm Excimer und Hg-Strahler | | | | Aceton | 4 | |
| | | 99 | 3,9 | 1,4x10⁵ | Senf | 5 | 294 |
| | | | | µVs | NaOH | 5 | |
| | | | | | Jod | 4,5 | |
| Formulierung 4 Nanokomposit** (ohne Photoinitiator) | mit 172 nm Excimer und Hg-Strahler | | | | Aceton | 2 | |
| | | 98 | 5,1 | 2.5x10⁵ | Senf | 5 | 182 |
| | | | | µVs | NaOH | 5 | |
| | | | | | Jod | 4 | |

## Patentansprüche

1. Verfahren zur direkten Auslösung der Polymerisation und Vernetzung von monomeren und/oder oligomeren Acrylaten und Methacrylaten durch ultraviolette Strahlung **dadurch gekennzeichnet, dass** zur Bestrahlung ein Xenon- bzw. Argon-Excimerstrahler mit einem Quecksilber-Mitteldruck-Strahler kombiniert wird und die Bestrahlung unter Inertgas bei stark verringerter Sauerstoffkonzentration erfolgt.

2. Verfahren nach Anspruch 2, **dadurch gekennzeichnet, dass** die monomeren und/oder oligomeren Acrylate und Methacrylate im ersten Bestrahlungsschritt mit Photonen eines Excimerstrahlers und unmittelbar zeitlich nachfolgend mit Photonen eines Quecksilber-Mitteldruck-Strahlers bestrahlt werden.

3. Verfahren nach Anspruch 2, **dadurch gekennzeichnet, dass** beide Bestrahlungen in einer geschlossenen Kammer erfolgen, die mit Inertgas wie Stickstoff oder Kohlendioxid so gefüllt wird, dass die Sauerstoffkonzentration in den Bestrahlungszonen < 100 ppm beträgt.

4. Vorrichtung zur direkten Auslösung der Polymerisation und Vernetzung von monomeren und/oder oligomeren Acrylaten und Methacrylaten, **dadurch gekennzeichnet, dass** sie aus einer geschlossenen Bestrahlungskammer (1) besteht, welche Eingangsdüsen (2) und Volumendüsen (3) zum Einblasen gasförmigen Stickstoffs aufweist und dass unmittelbar hinter den Eingangsdüsen (2) mindestens ein Xenon- oder Argon-Excimerstrahler (4) angeordnet ist, welcher eine Wasserkühlung und eine Stickstoffeinspeisung (5) oberhalb seiner Strahlerröhre aufweist, wobei das Gehäuse des Strahlers (4) dicht auf dem oberen Segment der Bestrahlungskammer (1) aufsitzt und die Emission des Excimerstrahlers 4 in die Bestrahlungsebene der Kammer (1) gerichtet ist und in Bahnrichtung einer Fördereinrichtung (6) in die inertisierte Bestrahlungsklammer (1) angeordnet ist und unmittelbar hinter dem Excimerstrahler (4) ein Mitteldruck-Quecksilber-Strahler (7) angeordnet ist und die Bestrahlungskammer (1) in dieser Position eine abgedichtete Quarzplatte aufweist, durch die die Strahlung eindringen kann, und der Mitteldruck-Quecksilber-Strahler (7) von der Kammer (1) gasdicht getrennt ist.

## Claims

1. A method for the direct initiation of polymerization and bonding of monomer and/or oligomer acrylates and methacrylates by ultraviolet radiation, **characterized in that** for radiation, a xenon or argon excimer emitter is combined with a medium pressure mercury emitter, and radiation is made possible by means of an inert gas at a highly decreased oxygen concentration.

2. A method in accordance with Claim 2, **characterized in that** the monomer and/or oligomer acrylates and methacrylates are, in a first radiation stage, exposed to photons emitted by an excimer emitter, and immediately afterwards to photons emitted by a medium pressure mercury emitter.

3. A method in accordance with Claim 2, **characterized in that** both radiation processes take place in a closed chamber, which is filled with an inert gas like oxygen or carbon oxide in such a way that the oxygen concentration is < 100 ppm in the radiation zones.

4. A method for the direct initiation of polymerization and bonding of monomer and/or oligomer acrylates and methacrylates, **characterized in that** it comprises a closed radiation chamber (1) with inlet nozzles (2) and volume nozzles (3) allowing gaseous oxygen to be blown in, having at least an xenon or argon excimer emitter (4) arranged directly behind the inlet nozzles (2), the excimer emitter being provided with a water cooling and oxygen supply device (5) above its emitter tube, wherein the casing of emitter (4) is sitting sealed-off on the top segment of radiation chamber (1), and the emission of the excimer emitter (4) being directed at the radiation level of chamber (1) and arranged in the feed direction of a conveyor unit (5) into the inerted radiation chamber (1), a medium pressure mercury emitter (7) being arranged directly behind the excimer emitter (4), and the radiation chamber (1) being provided in this position with a sealed-off quartz plate, which allows for the radiation to pass through, and the medium pressure mercury emitter (7) being sealed off against the chamber (1) with a gas-tight connection.

## Revendications

1. Procédure pour le déclenchement direct de la polymérisation et de la réticulation des acrylates et des méthacrylates monomériques et/ou oligomériques à l'aide du rayonnement ultraviolet, **caractérisée en ce qu'**un émetteur à excimères au xenon ou argon est combiné pour le rayonnement avec un émetteur mercure à moyenne pression, et que le rayonnement est réalisé sous gaz inerte à une concentration en oxygène fortement réduite.

2. Procédure selon la revendication 2, **caractérisée en ce que** les acrylates et les méthacrylates monomériques et/ou oligomériques sont rayonnés, dans une première étape, avec des photons émis par un émetteur à excimères, et tout de suite après avec des photons émis par un émetteur mercure à moyenne pression.

3. Procédure selon la revendication 2, **caractérisée en ce que** les deux rayonnements s'effectuent dans une chambre fermée, qui est remplie d'un gaz inerte comme, par exemple, oxygène ou dioxyde de carbone, de façon que la concentration d'oxygène dans les zones de rayonnement soit inférieure à 100 ppm.

4. Procédure pour le déclenchement direct de la polymérisation et de la réticulation des acrylates et des méthacrylates monomériques et/ou oligomériques, **caractérisée en ce qu'**il s'agit d'une chambre de rayonnement (1) fermée, qui est pourvue de buses d'entrée (2) et de buses de volume (3) pour l'injection d'oxygène gazeux, et qu'au moins un émetteur à excimères au xénon ou argon (4) est arrangé directement en aval des buses d'entrée (2) et que cet émetteur est pourvu d'une unité de refroidissement à eau et d'une alimentation en oxygène (5) au-dessus de son tuyau émetteur, et que le boîtier de l'émetteur (4) est placé de manière étanche sur l'élément supérieur de la chambre de rayonnement (1), et l'émission de l'émetteur à excimères (4) est dirigée vers le niveau de rayonnement de la chambre (1), et que l'émission est dirigée dans le sens de convoyage d'un convoyeur (6) vers la chambre de rayonnement inertie (1), et qu'un émetteur mercure à moyenne pression (7) est placé directement en aval de l'émetteur à excimères (4), et que la chambre de rayonnement (1) est pourvue, dans cette position, d'une plaque étanche de quartz, qui laisse pénétrer les rayons, et que l'émetteur mercure à moyenne pression (7) est séparé de la chambre (1) de façon étanche aux gaz.
